# EUROPEAN PATENT APPLICATION

(11) **EP 4 502 067 A1**
(43) Date of publication of application: **05.02.2025**
(21) Application number: 22935678.7
(22) Date of filing: 05.12.2022
(51) Int. Cl.: C08L 77/06, B29C 45/00, C08G 69/26

(54) **RESIN COMPOSITION, MOLDED ARTICLE, AND METHOD FOR MANUFACTURING MOLDED ARTICLE**

(30) Priority: 28.03.2022 JP 2022051691
(71) Applicant: MITSUBISHI GAS CHEMICAL COMPANY, INC., Chiyoda-ku Tokyo 100-8324 (JP)
(72) Inventor: OGURO Hatsuki, Hiratsuka-shi, Kanagawa 254-0016 (JP); AMANO Akio, Hiratsuka-shi, Kanagawa 254-0016 (JP)
(74) Representative: Vossius & Partner Patentanwälte Rechtsanwälte mbB
(86) International application number: PCT/JP2022/044726
(87) International publication number: WO 2023/188549

(57) **Abstract**

A resin composition includes, per 100 parts by mass of a total of a polyamide resin A and a polyamide resin B, 1 to 15 parts by mass of the polyamide resin B, a difference between a melting point Tmb of the polyamide resin B and a melting point Tma of the polyamide resin A is 35 to 110°C, a structural unit derived from a diamine includes 100 to 50 mol% of a structural unit derived from m-xylylenediamine in the polyamide resin A, 70 mol% or more of a structural unit derived from a dicarboxylic acid is derived from an α,ω-linear aliphatic dicarboxylic acid having 7 to 16 carbon atoms, the structural unit derived from a diamine includes 100 to 95 mol% of a structural unit derived from p-xylylenediamine in the polyamide resin B, and 70 mol% or more of the structural unit derived from a dicarboxylic acid is derived from an α,ω-linear aliphatic dicarboxylic acid having 7 to 16 carbon atoms.

## Description

### TECHNICAL FIELD

The present invention relates to a resin composition, a molded product, and a method for producing the molded product.

### BACKGROUND ART

A polyamide resin has excellent mechanical strength, thermal resistance, water resistance, and chemical resistance. Therefore, plastics produced from a resin composition containing a polyamide resin are used in various applications such as automobiles, transportation, electricity, and electronic devices.

In order to injection-mold a commercially available polyamide resin with sufficient quality, it is necessary to set the mold temperature to be relatively high in order to sufficiently crystallize the polyamide resin in the mold.

In order to solve such an issue, Patent Document 1 discloses a resin composition, in which the resin composition includes a polyamide (P1) and a polyamide (P2), Tm(P2) and Tm(P1), which are melting points of P2 and P1, satisfy Tm(P2) > Tm(P1), Tc(P2) and Tc(P1), which are crystallization temperatures in temperature drop of P2 and P1, satisfy Tc(P2) > Tc(P1), a weight ratio of P1/P2 changes between 15/1 and 1/1, and P1 includes the following structural unit, (I): 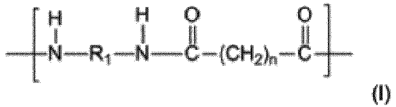 where n is 4 to 18, Ri includes m-xylylene and p-xylylene in a ratio of 1:99 to 99:1 in mol%, and P2 includes the following structural unit: 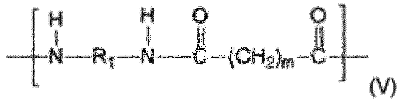 where m is 6 to 18.

In Examples of Patent Document 1, there is disclosed a resin composition containing about 44 to 29 parts by mass of MXD6/PXD6 and about 5 to 20 parts by mass of PXD10. Here, MXD means m-xylylenediamine, PXD means p-xylylenediamine, 6 means adipic acid, and 10 means sebacic acid.

### Citation List

### Patent Documents

Patent Document 1: WO 2020/225358

### Summary of Invention

### Technical Problem

The inventors of the present invention studied the resin composition described in Patent Document 1, and found that the crystallization rate was slow. In addition, regarding the resin composition described in Patent Document 1, it was found that the half-crystallization time; i.e., the crystallization rate greatly changes depending on mold temperatures. Moreover, even when the crystallization rate is high, if the physical properties of the obtained molded product are poor, it is not practical.

Therefore, an object of the present invention is to solve such issues and to provide a resin composition having a high crystallization rate and a small decrease in physical properties of the obtained molded product.

Another object is to provide a molded product formed from the resin composition and a method for producing the molded product.

### Solution to Problem

As a result of studies conducted in response to the issue described above, the present inventors have found that the above issues can be solved by using a xylylenediamine-based polyamide resin that includes a structural unit derived from an α,ω-linear aliphatic dicarboxylic acid having 7 to 16 carbon atoms.

Specifically, the issues described above are solved by the following means:
<1> A resin composition, including:
   a polyamide resin A; and
   a polyamide resin B,
   wherein the resin composition includes 1 to 15 parts by mass of the polyamide resin B, per 100 parts by mass of a total of the polyamide resin A and the polyamide resin B,
   a difference (Tmb-Tma) between a melting point Tmb of the polyamide resin B according to differential scanning calorimetry (DSC) and a melting point Tma of the polyamide resin A according to differential scanning calorimetry (DSC) is 35 to 110°C,
   the polyamide resin A includes a structural unit derived from a diamine and a structural unit derived from a dicarboxylic acid, the structural unit derived from a diamine including 100 to 50 mol% of a structural unit derived from m-xylylenediamine and 0 to 50 mol% of a structural unit derived from p-xylylenediamine, with the proviso that a total of the structural unit derived from m-xylylenediamine and the structural unit derived from p-xylylenediamine does not exceed 100 mol%, and 70 mol% or more of the structural unit derived from a dicarboxylic acid being derived from an α,ω-linear aliphatic dicarboxylic acid having 7 to 16 carbon atoms, and
   the polyamide resin B includes a structural unit derived from a diamine and a structural unit derived from a dicarboxylic acid, the structural unit derived from a diamine including 100 to 95 mol% of a structural unit derived from p-xylylenediamine and 0 to 5 mol% of a structural unit derived from m-xylylenediamine, with the proviso that a total of the structural unit derived from p-xylylenediamine and the structural unit derived from m-xylylenediamine does not exceed 100 mol%, and 70 mol% or more of the structural unit derived from a dicarboxylic acid being derived from an α,ω-linear aliphatic dicarboxylic acid having 7 to 16 carbon atoms.
<2> The resin composition described in <1>, wherein the melting point Tma of the polyamide resin A according to the differential scanning calorimetry (DSC) is 180 to 240°C.
<3> The resin composition described in <1> or <2>, wherein 70 mol% or more of the structural unit derived from a dicarboxylic acid in the polyamide resin A is derived from sebacic acid.
<4> The resin composition described in any one of <1> to <3>, wherein the melting point Tmb of the polyamide resin B according to the differential scanning calorimetry (DSC) is 270 to 320°C.
<5> The resin composition described in any one of <1> to <4>, wherein 70 mol% or more of the structural unit derived from a dicarboxylic acid in the polyamide resin B is derived from sebacic acid.
<6> The resin composition described in <1>,
   wherein the melting point Tma of the polyamide resin A according to the differential scanning calorimetry (DSC) is 180 to 240°C,
   70 mol% or more of the structural unit derived from a dicarboxylic acid in the polyamide resin A is derived from sebacic acid,
   the melting point Tmb of the polyamide resin B according to the differential scanning calorimetry (DSC) is 270 to 320°C, and
   70 mol% or more of the structural unit derived from a dicarboxylic acid in the polyamide resin B is derived from sebacic acid.
<7> The resin composition described in any one of <1> to <6>, further including 10 to 150 parts by mass of a reinforcing material per 100 parts by mass of the total of the polyamide resin A and the polyamide resin B.
<8> A molded product, including the resin composition described in any one of <1> to <7>.
<9> A method for producing a molded product, the method including injection-molding the resin composition described in any one of <1> to <7>.
<10> The method for producing a molded product described in <9>, wherein a cylinder temperature at the injection-molding is equal to or higher than the melting point of the polyamide resin A + 20°C and is lower than the melting point of the polyamide resin B.
<11> The method for producing a molded product described in <9> or <10>, wherein, in the resin composition immediately before the resin composition is injected into a mold for injection molding, the polyamide resin A is melted, and at least part of the polyamide resin B is not melted.

### Advantageous Effects of Invention

According to the present invention, it has become possible to provide a resin composition having a high crystallization rate and a small decrease in physical properties of the obtained molded product, a molded product formed from the resin composition, and a method for producing the molded product.

### Description of Embodiments

Embodiments for carrying out the present invention (hereinafter referred to simply as "the present embodiment") will next be described in detail. The present embodiment described below is an example for describing the present invention, and the present invention is not limited only to the present embodiment.

In the present specification, numerical values described before and after the term "to" are respectively the lower limit and the upper limit of a range including the numerical values.

In the present specification, various physical property values and characteristic values are those at 23°C, unless otherwise noted.

When a measurement method described in a standard set forth in the present specification differs depending on the year, it is based on the standard as of January 1, 2022, unless otherwise stated.

In the present specification, a polyamide resin synthesized from m-xylylenediamine, p-xylylenediamine, and adipic acid may be referred to as MP6, and a polyamide resin synthesized from m-xylylenediamine, p-xylylenediamine, and sebacic acid may be referred to as MP10. In addition, a polyamide resin synthesized from m-xylylenediamine and adipic acid may be referred to as MXD6, and a polyamide resin synthesized from p-xylylenediamine and sebacic acid may be referred to as PXD10.

The resin composition of the present embodiment is characterized by the following. That is, the resin composition includes a polyamide resin A and a polyamide resin B. The resin composition includes 1 to 15 parts by mass of the polyamide resin B per 100 parts by mass of a total of the polyamide resin A and the polyamide resin B. A difference (Tmb-Tma) between a melting point Tmb of the polyamide resin B according to the differential scanning calorimetry (DSC) and a melting point Tma of the polyamide resin A according to the differential scanning calorimetry (DSC) is 35 to 110°C. The polyamide resin A includes a structural unit derived from a diamine and a structural unit derived from a dicarboxylic acid, the structural unit derived from a diamine includes 100 to 50 mol% of a structural unit derived from m-xylylenediamine and 0 to 50 mol% of a structural unit derived from p-xylylenediamine, with the proviso that a total of the structural unit derived from m-xylylenediamine and the structural unit derived from p-xylylenediamine does not exceed 100 mol%, and 70 mol% or more of the structural unit derived from a dicarboxylic acid is derived from an α,ω-linear aliphatic dicarboxylic acid having 7 to 16 carbon atoms. The polyamide resin B includes a structural unit derived from a diamine and a structural unit derived from a dicarboxylic acid, the structural unit derived from a diamine includes 100 to 95 mol% of a structural unit derived from p-xylylenediamine and 0 to 5 mol% of a structural unit derived from m-xylylenediamine, with the proviso that a total of the structural unit derived from p-xylylenediamine and the structural unit derived from m-xylylenediamine does not exceed 100 mol%, and 70 mol% or more of the structural unit derived from a dicarboxylic acid is derived from an α,ω-linear aliphatic dicarboxylic acid having 7 to 16 carbon atoms.

In the present specification, when one polyamide resin A has two or more melting points, the highest melting point is defined as the melting point of the polyamide resin A. The same applies to the polyamide resin B.

Such a configuration makes it possible to obtain a composition having a high crystallization rate and a small decrease of physical properties of the obtained molded product. Moreover, it is possible to provide a resin composition in which the crystallization rate is less likely to depend on the mold temperature.

The polyamide resin A such as MP10 or MXD10 is originally a polyamide resin excellent in mechanical physical properties, but is also a polyamide resin in which the crystallization rate is not very high. For this reason, when MP10 or the like is molded, an inorganic crystal nucleating agent such as talc or resins having a short half-crystallization time such as polyamide 66 (PA66) is usually blended in order to promote the crystallization. However, when an inorganic crystal nucleating agent such as talc is blended, physical properties such as mechanical strength of the obtained molded product tend to be deteriorated. In addition, when a resin such as PA66 is blended, a phenomenon occurs in which the half-crystallization time is shortened; i.e., the crystallization rate is increased depending on temperatures, but the half-crystallization time is not shortened depending on temperatures. In addition, when a resin such as PA66 is blended, the degree of progress of crystallization varies greatly depending on the mold temperature. If the degree of progress of crystallization varies depending on the mold temperature, the range of molding conditions is narrow and stable molding becomes difficult. In particular, when PA66 is added to the polyamide resin A such as MP10, the crystallization may not be completed in a mold at a low temperature.

In the present embodiment, when the polyamide resin B such as PXD10 having a melting temperature higher than that of the polyamide resin A such as MP10 by 35°C or more is blended, the resin composition, which includes the polyamide resin A such as MP 10 has a high crystallization rate and is hardly affected by temperature, can be provided. Furthermore, since the crystallization rate can be increased without blending an inorganic crystal nucleating agent such as talc, the physical properties such as mechanical strength can be kept high.

The reason for this is presumed as described below. That is, by using polyamide resins having a large difference between their melting points, the polyamide resin B is present in a dispersed state without being substantially melted in the resin composition at a temperature suitable for molding the polyamide resin A as the main component. That is, the polyamide resin B acts as an inorganic crystal nucleating agent to promote crystallization of the polyamide resin A. On the other hand, unlike the inorganic crystal nucleating agent, the polyamide resin B does not affect a decrease of the physical properties of the obtained molded product. Furthermore, unlike PA66 or the like, the polyamide resin B can decrease a difference in half-crystallization time depending on the mold temperature. This is presumably because the melting temperature of PA66 is close to that of the polyamide resins A such as MP10. Therefore, it is presumed that the PA66 is also in a state of being easily melted at the forming temperature of the polyamide resins A and the effect as the crystal nucleating agent as described above is not achieved.

Moreover, in the present embodiment, there is an advantage that the half-crystallization time hardly varies even if the mold temperature is lowered.

The details of the resin compositions of the present embodiments will be described below.

### <Polyamide resin A>

The resin composition of the present embodiment includes a polyamide resin A. The polyamide resin A includes a structural unit derived from a diamine and a structural unit derived from a dicarboxylic acid, the structural unit derived from a diamine includes 100 to 50 mol% of a structural unit derived from m-xylylenediamine and 0 to 50 mol% of a structural unit derived from p-xylylenediamine, with the proviso that a total of the structural unit derived from m-xylylenediamine and the structural unit derived from p-xylylenediamine does not exceed 100 mol%, and 70 mol% or more of the structural unit derived from a dicarboxylic acid is derived from an α,ω-linear aliphatic dicarboxylic acid having 7 to 16 carbon atoms. The polyamide resin A is usually a component serving as a main component of the resin component contained in the resin composition of the present embodiment. The polyamide resin A is excellent in various physical properties such as mechanical strength, and a molded product obtained by using such a resin is preferably used for various applications.

In the polyamide resin A, the structural unit derived from a diamine includes 100 to 50 mol% of a structural unit derived from m-xylylenediamine and 0 to 50 mol% of a structural unit derived from p-xylylenediamine.

In the polyamide resin A, preferably 80 mol% or more, more preferably 90 mol% or more, even more preferably 95 mol% or more, and yet even more preferably 99 mol% or more of the structural unit derived from a diamine is derived from xylylenediamine.

As described above, xylylenediamine includes 100 to 50 mol% of m-xylylenediamine and 0 to 50 mol% of p-xylylenediamine, preferably includes 90 to 50 mol% of m-xylylenediamine and 10 to 50 mol% of p-xylylenediamine, and more preferably includes 80 to 60 mol% of m-xylylenediamine and 20 to 40 mol% of p-xylylenediamine.

Examples of the diamine other than p-xylylenediamine and m-xylylenediamine that can be used as a raw material diamine component of the polyamide resin A include aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethyl-hexamethylenediamine, and 2,4,4-trimethylhexamethylenediamine; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and diamines having an aromatic ring, such as bis(4-aminophenyl) ether, p-phenylenediamine, and bis(aminomethyl)naphthalene. One type thereof can be used, or two or more types thereof can be mixed and used.

In the polyamide resin A, the structural unit derived from a dicarboxylic acid is derived from 70 mol% or more, preferably 75 mol% or more, more preferably 80 mol% or more, still more preferably 85 mol% or more, yet still more preferably 90 mol% or more, further still more preferably 95 mol% or more, further yet still more preferably 99 mol% or more of an α,ω-linear aliphatic dicarboxylic acid having 7 to 16 carbon atoms (preferably sebacic acid).

When the proportion of the α,ω-linear aliphatic dicarboxylic acid having 7 to 16 carbon atoms is increased, the half-crystallization time tends to depend less on the mold temperature.

Examples of the α,ω-linear aliphatic dicarboxylic acid having 7 to 16 carbon atoms include pimelic acid, suberic acid, azelaic acid, sebacic acid, dodecanedioic acid, and tetradecanedioic acid. Sebacic acid and dodecanedioic acid are preferable, and sebacic acid is more preferable.

Examples of the dicarboxylic acid other than the above α,ω-linear aliphatic dicarboxylic acid having 7 to 16 carbon atoms can include linear aliphatic dicarboxylic acids having 6 or less carbon atoms such as adipic acid; phthalic acid compounds such as isophthalic acid, terephthalic acid, and orthophthalic acid; and naphthalenedicarboxylic acid isomers such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid. One of these can be used, or two or more thereof can be mixed and used.

The polyamide resin A in the present embodiment is constituted by a structural unit derived from a diamine and a structural unit derived from a dicarboxylic acid as main components, but does not entirely exclude structural units other than these units. The polyamide resin A may contain a structural unit derived from lactam such as ε-caprolactam or laurolactam, or derived from an aliphatic aminocarboxylic acid such as aminocaproic acid and aminoundecanoic acid. Here, the term "main component" indicates that, of the structural units constituting the polyamide resin A, the total number of the structural units derived from a diamine and the structural units derived from a dicarboxylic acid is the largest among all the structural units. In the present embodiment, the total of the structural units derived from a diamine and the structural units derived from a dicarboxylic acid in the polyamide resin A preferably accounts for 90 mass% or more, more preferably 95 mass% or more, and even more preferably 98 mass% or more, of the total structural units.

The melting point Tma of the polyamide resin A according to the differential scanning calorimetry (DSC) is preferably 180°C or more, more preferably 185°C or more, still more preferably 195°C or more, yet still more preferably 200°C or more, and further yet still more preferably 210°C or more. When it is equal to or higher than the lower limit, the mold temperature dependence of the half-crystallization time tends to be decreased. The melting point Tma is preferably 240°C or less, more preferably 235°C or less, still more preferably 230°C or less, further still more preferably 225°C or less, and further yet still more preferably 220°C or less. When it is equal to or lower than the upper limit, the range of conditions for stable molding is widened, which is preferable.

### <Polyamide resin B>

The resin composition of the present embodiment includes a polyamide resin B. The polyamide resin B includes a structural unit derived from a diamine and a structural unit derived from a dicarboxylic acid, the structural unit derived from a diamine includes 100 to 95 mol% of a structural unit derived from p-xylylenediamine and 0 to 5 mol% of a structural unit derived from m-xylylenediamine, with the proviso that a total of the structural unit derived from p-xylylenediamine and the structural unit derived from m-xylylenediamine does not exceed 100 mol%, and 70 mol% or more of the structural unit derived from a dicarboxylic acid is derived from an α,ω-linear aliphatic dicarboxylic acid having 7 to 16 carbon atoms. Inclusion of the polyamide resin B makes it possible to shorten the half-crystallization time of the resin composition while excellent physical properties of the obtained resin composition are maintained.

In the polyamide resin B, the structural unit derived from a diamine includes 100 to 95 mol% of a structural unit derived from p-xylylenediamine and 0 to 5 mol% of a structural unit derived from m-xylylenediamine. When the proportion of p-xylylenediamine is increased, the melting point of the polyamide resin B can be increased. In the present embodiment, preferably 95 mol% or more, more preferably 96 mol% or more, still more preferably 97 mol% or more, further still more preferably 98 mol% or more, and yet further still more preferably 99 mol% or more, of the structural unit derived from a diamine is derived from p-xylylenediamine. The upper limit is 100 mol% of p-xylylenediamine.

The polyamide resin B may contain a structural unit derived from a diamine other than p-xylylenediamine and m-xylylenediamine. The diamine in this case has the same meaning as the diamine other than p-xylylenediamine and m-xylylenediamine described in the section of the polyamide resin A.

In the polyamide resin B, the structural unit derived from a dicarboxylic acid is derived from 70 mol% or more, preferably 75 mol% or more, more preferably 80 mol% or more, still more preferably 85 mol% or more, yet still more preferably 90 mol% or more, further still more preferably 95 mol% or more, further yet still more preferably 99 mol% or more of an α,ω-linear aliphatic dicarboxylic acid having 7 to 16 carbon atoms (preferably sebacic acid).

Examples of the α,ω-linear aliphatic dicarboxylic acid having 7 to 16 carbon atoms include pimelic acid, suberic acid, azelaic acid, sebacic acid, dodecanedioic acid, and tetradecanedioic acid. Sebacic acid and dodecanedioic acid are preferable, and sebacic acid is more preferable.

The dicarboxylic acids other than the α,ω-linear aliphatic dicarboxylic acid having 7 to 16 carbon atoms has the same meaning as the dicarboxylic acid described in the section of the polyamide resin A.

Note that the polyamide resin B in the present embodiment is constituted by a structural unit derived from a diamine and a structural unit derived from a dicarboxylic acid as main components, but does not entirely exclude structural units other than these. Of course, the polyamide resin B may contain a structural unit derived from lactam such as ε-caprolactam or laurolactam, or from an aliphatic aminocarboxylic acid such as aminocaproic acid and aminoundecanoic acid. Here, the term "main component" indicates that, of the structural units constituting the polyamide resin B, the total number of the structural units derived from a diamine and the structural units derived from a dicarboxylic acid is the largest among all the structural units. In the present embodiment, the total of the structural units derived from a diamine and the structural units derived from a dicarboxylic acid in the polyamide resin B preferably accounts for 90 mass% or more, more preferably 95 mass% or more, and even more preferably 98 mass% or more, of the total structural units.

The melting point Tmb of the polyamide resin B according to the differential scanning calorimetry (DSC) is preferably 270°C or more, more preferably 275°C or more, still more preferably 280°C or more, further still more preferably 285°C or more, and yet still more preferably 288°C or more. The melting point Tmb is preferably 320°C or less, more preferably 310°C or less, still more preferably 305°C or less, further still more preferably 300°C or less, and yet still more preferably 295°C or less.

The content of the polyamide resin B in the resin composition of the present embodiment is preferably 0.5% by mass or more, more preferably 1% by mass or more, still more preferably 2% by mass or more, and further still more preferably 4% by mass or more of the resin composition. In addition, the content of the polyamide resin B in the resin composition of the present embodiment is preferably 15% by mass or less of the resin composition, more preferably 11% by mass, still more preferably 10% by mass or less, further still more preferably 8% by mass or less, and yet still more preferably 6% by mass or less. Setting the ratio in such a range tends to allow the effect of the present invention to be more effectively exhibited.

### <Relationship between polyamide resin A and polyamide resin B>

The resin composition of the present embodiment includes 1 to 15 parts by mass of the polyamide resin B per 100 parts by mass of the total of the polyamide resin A and the polyamide resin B. When it is equal to or higher than the above lower limit, the half-crystallization time can be shortened. When it is equal to or lower than the above upper limit, a decrease of mechanical physical properties can tend to be prevented. In the present embodiment, the content of the polyamide resin B per 100 parts by mass of the total of the polyamide resin A and the polyamide resin B is preferably 2 parts by mass or more, and preferably 14 parts by mass or less and more preferably 12 parts by mass or less, and may be 10 parts by mass or less.

The total amount of the polyamide resin A and the polyamide resin B in the resin composition of the present embodiment is preferably 40% by mass or more and more preferably 45% by mass or more, and may be 50% by mass or more in the resin composition. The total amount of the polyamide resin A and the polyamide resin B in the resin composition of the present embodiment is preferably 80% by mass or less and more preferably 75% by mass or less in the resin composition.

In addition, the total amount of the polyamide resin A and the polyamide resin B relative to the total amount of the resin components in the resin composition of the present embodiment is preferably 95% by mass or more, more preferably 97% by mass or more, and still more preferably 99% by mass or more. The upper limit of the total amount of the polyamide resin A and the polyamide resin B relative to the total amount of the resin components in the resin composition of the present embodiment is 100%.

The resin composition of the present embodiment may include one type of the polyamide resin A and one type of the polyamide resin B, or may include two or more types of the polyamide resin A and two or more types of the polyamide resin B. When two or more types of these resins are included, each of the total amounts preferably falls within the above range.

In the resin composition of the present embodiment, a difference (Tmb-Tma) between a melting point Tmb of the polyamide resin B according to the differential scanning calorimetry (DSC) and a melting point Tma of the polyamide resin A according to the differential scanning calorimetry (DSC) is 35 to 110°C. When the lower limit is equal to or higher than the above value and the upper limit is equal to or lower than the above value, the half-crystallization time can be less likely to depend on the mold temperature.

In the present embodiment, the (Tmb-Tma) is preferably 40°C or more, more preferably 55°C or more, still more preferably 60°C or more, further still more preferably 65°C or more, and yet still more preferably 70°C or more. When the (Tmb-Tma) is equal to or higher than the lower limit, stable forming can be achieved. The (Tmb-Tma) is preferably 105°C or less, more preferably 95°C or less, still more preferably 90°C or less, further still more preferably 85°C or less, and yet still more preferably 80°C or less. When the (Tmb-Tma) is equal to or lower than the upper limit, the mold temperature dependence of the half-crystallization time can tend to be decreased.

In the present embodiment, when two types of the polyamide resins A are included, the melting point of the component having the highest content is defined as the melting point of the polyamide resin A. The same applies to the polyamide resin B.

In the resin composition of the present embodiment, particularly preferably, the melting point Tma of the polyamide resin A according to the differential scanning calorimetry (DSC) is 180 to 240°C (preferably 180 to 230°C), 70 mol% or more of the structural unit derived from a dicarboxylic acid in the polyamide resin A is derived from sebacic acid, the melting point Tmb of the polyamide resin B according to the differential scanning calorimetry (DSC) is 270 to 320°C, and 70 mol% or more of the structural unit derived from a dicarboxylic acid in the polyamide resin B is derived from sebacic acid.

Moreover, a difference (Tmb-Tma) between the melting point Tmb of the polyamide resin B according to the differential scanning calorimetry (DSC) and the melting point Tma of the polyamide resin A according to the differential scanning calorimetry (DSC) is 55 to 110°C (preferably 70 to 105°C).

In the resin composition of the present embodiment, preferably, 95 mol% or more (more preferably 98 mol% or more, still more preferably 99 mol% or more) of the total structural units derived from a dicarboxylic acid included in the polyamide resin A and the polyamide resin B is derived from sebacic acid, and 95 mol% or more (more preferably 98 mol% or more, still more preferably 99 mol% or more) of the total structural units derived from a diamine included in the polyamide resin A and the polyamide resin B is derived from m-xylylenediamine or p-xylylenediamine.

### <Other components>

The resin composition of the present embodiment may include a component other than the polyamide resin A and the polyamide resin B. Specific examples thereof include polyamide resins other than the polyamide resin A and the polyamide resin B, thermoplastic resins other than the polyamide resins, reinforcing materials, inorganic crystal nucleating agents (for example, talc), release agents, colorants, light stabilizers, antioxidants, heat stabilizers, flame retardants, flame retardant aids, ultraviolet absorbers, fluorescent brighteners, anti-dropping agents, antistatic agents, antifogging agents, anti-blocking agents, fluidity improvers, weatherability improvers, light resistance improvers, plasticizers, dispersants, and antibacterial agents. Only one type of these components may be used alone, or two or more types of these components may be used in combination. For these details, descriptions in paragraphs [0130] to [0155] of JP 4894982 B can be referred to, the contents of which are incorporated herein by reference.

In particular, for the release agent used in the present embodiment, the description of paragraph [0030] of JP 2021-188029 A, the contents of which are incorporated herein, can be referenced.

In particular, for the inorganic crystal nucleating agent used in the present embodiment, the description of paragraphs [0031] to [0032] of JP 2021-188029 A, the contents of which are incorporated herein, can be referenced.

The resin composition of the present embodiment can also be configured to be substantially free from the inorganic crystal nucleating agent. The term "substantially free" means that, for example, the content of the inorganic crystal nucleating agent in the resin composition is less than 0.01% by mass, and preferably less than 0.001% by mass. The present embodiment is preferable because the blending amount of the inorganic crystal nucleating agent such as talc is small, or even if the inorganic crystal nucleating agent is not blended, the half-crystallization time can be shortened.

### <<Reinforcing material>>

The resin composition of the present embodiments preferably contains a reinforcing material. The reinforcing material may be an organic reinforcing material or an inorganic reinforcing material, but is preferably an inorganic reinforcing material.

Examples of the reinforcing material include filler reinforcing materials, particulate reinforcing materials, and fibrous reinforcing materials. The fibrous reinforcing materials are preferable.

Preferable examples of the reinforcing material used in the present embodiment include plant fibers, carbon fibers, glass fibers, alumina fibers, boron fibers, ceramic fibers, and aramid fibers. The reinforcing material is preferably selected from carbon fibers and glass fibers, and is more preferably glass fibers.

As the glass fibers, fibers obtained by melt spinning glass such as E glass, C glass, A glass, S glass, and alkali-resistant glass, which are available generally, are used. However, as long as the fibers can be formed into glass fibers, such glass fibers can be used, and the type of glass fibers is not particularly limited. In the present embodiment, the glass fibers preferably include E glass.

The glass fibers are preferably surface-treated with a surface treatment agent, such as a silane coupling agent, such as γ-methacryloxypropyltrimethoxysilane, γ-glycidoxypropyltrimethoxysilane, and γ-aminopropyltriethoxysilane. The deposition amount of the surface treatment agent is preferably from 0.01 to 1 mass% of the glass fibers. Furthermore, optionally, glass fibers surface-treated with a lubricant, such as a fatty acid amide compound and a silicone oil; an antistatic agent, such as a quaternary ammonium salt; a resin having film-forming ability, such as an epoxy resin and a urethane resin; or a mixture containing components, such as a resin having film-forming ability, a thermal stabilizer, and a flame retardant; can also be used.

The glass fibers used in the resin composition of the present embodiment can be obtained as commercially available products. Examples of the commercially available products include: T-275H, T-286H, T-756H, T-289, T-289DE, T-289H, and T-296GH available from Nippon Electric Glass Co., Ltd.; DEFT2A available from Owens Corning; HP3540 available from PPG Industries, Inc.; CSG3PA-810S and CSG3PA-820 available from Nitto Boseki Co., Ltd.; and EFH50-31 available from Central Glass Co., Ltd. (all names are product names).

The cross-section of the reinforcing material may be either circular or non-circular (elliptical, oval, rectangular, a shape obtained by combining semicircles with both short sides of a rectangle, cocoon shape, etc.), and is preferably circular. In the present invention, when a reinforcing material having a circular cross-section is used, the effect of improving flame retardancy and mechanical strength is particularly remarkable.

The term "circle" used herein includes not only a perfect circle in a geometrical sense, but also what is commonly referred to as a circle in the technical field of the present invention.

Examples of the reinforcing material having a non-circular cross section include reinforcing materials having a flat shape described in paragraphs [0048] to [0052] of JP 2012-214819 A, the contents of which are incorporated herein by reference.

The number average fiber length (cut length) of the reinforcing material in the resin composition of the present embodiment is preferably 100 µm or more, more preferably 150 µm or more, and still more preferably 200 µm or more. The upper limit is preferably 10 mm or less, more preferably 8 mm or less, and still more preferably 5 mm or less.

The number average fiber diameter of the reinforcing material used in the resin composition of the present embodiment is preferably 1 µm or more, more preferably 2 µm or more, and still more preferably 5 µm or more. The upper limit of the number average fiber diameter is preferably 50 µm or less, more preferably 30 µm or less, and even more preferably 20 µm or less.

The content of the reinforcing material (preferably glass fibers) in the resin composition of the present embodiment is preferably 10 parts by mass or more, more preferably 20 parts by mass or more, and still more preferably 30 parts by mass or more, per 100 parts by mass of the total of the polyamide resin A and the polyamide resin B. The upper limit of the content of the reinforcing material is preferably 150 parts by mass or less and more preferably 120 parts by mass or less, and may be 100 parts by mass or less and may be 80 parts by mass or less, per 100 parts by mass of the total of the polyamide resin A and the polyamide resin B.

The lower limit of the content of the reinforcing material (preferably glass fibers) in the resin composition of the present embodiment is preferably 20% by mass or more and more preferably 25% by mass or more, of the resin composition. The upper limit of the content is preferably 60% by mass or less and more preferably 55% by mass or less, and may be 50% by mass or less. When the content is equal to or higher than the lower limit, the mechanical strength tends to be remarkably improved. On the other hand, the content of the reinforcing material is equal to or lower than the above upper limit, the moldability tends to be improved.

The resin composition of the present embodiment may contain only one type of reinforcing material, or may contain two or more types of reinforcing materials. When two or more types are contained, the total amount thereof preferably falls within the above range.

### <<Other polyamide resin>>

The other polyamide resin may be an aliphatic polyamide resin or a semi-aromatic polyamide resin, and is preferably an aliphatic polyamide resin.

Examples of the aliphatic polyamide resin include polyamide 6, polyamide 66, polyamide 666, polyamide 10, polyamide 610, polyamide 11, and polyamide 12.

Examples of the semi-aromatic polyamide resin include polyamide 6T, polyamide 9T, polyamide 10T, polyamide 6I, polyamide 9I, polyamide 6T/6I, and polyamide 9T/9I.

The content of the polyamide resin other than the polyamide resin A and the polyamide resin B in the resin composition of the present embodiment is preferably 5 parts by mass or less, more preferably 3 parts by mass or less, still more preferably 1 part by mass or less, and may be 0.1 parts by mass or less, 0.01 parts by mass or less, or 0.001 parts by mass or less when the entire polyamide resin is defined as 100 parts by mass. The lower limit of the content of the polyamide resin other than the polyamide resin A and the polyamide resin B may be 0 parts by mass.

The content of the aliphatic polyamide resin in the resin composition of the present embodiment is preferably 5 parts by mass or less, more preferably 3 parts by mass or less, still more preferably 1 part by mass or less, and further may be less than 0.1 parts by mass, 0.01 parts by mass or less, 0.001 parts by mass or less when the entire polyamide resin is defined as 100 parts by mass. The lower limit of the content of the aliphatic polyamide resin may be 0 parts by mass.

The total content of polyamide 6 and polyamide 66 in the resin composition of the present embodiment is preferably 5 parts by mass or less, more preferably 3 parts by mass or less, still more preferably 1 part by mass or less, and further may be less than 0.1 parts by mass, 0.05 parts by mass or less, 0.01 parts by mass or less, or 0.001 parts by mass or less when the entire polyamide resin is defined as 100 parts by mass. The lower limit of the total content of the polyamide 6 and the polyamide 66 may be 0 parts by mass.

### <Difference in half-crystallization time of resin composition>

In the resin composition of the present embodiment, a difference between the half-crystallization time at 110°C and the half-crystallization time at 150°C is preferably 12.0 seconds or less, more preferably 10.0 seconds or less, still more preferably 8.0 seconds or less, further still more preferably 5.0 seconds or less, yet still more preferably 2.0 seconds or less, and even still more preferably 1.0 second or less. The lower limit of the difference between the half-crystallization time at 110°C and the half-crystallization time at 150°C is ideally 0 seconds, but is practically 0.01 seconds or more.

### <Method for producing resin composition>

The resin composition of the present embodiment can be produced by a known method for producing a thermoplastic resin composition.

As one embodiment of the method for producing the resin composition of the present embodiment, it is preferable to blend and knead the polyamide resin A, the polyamide resin B, and, if necessary, other components to be blended. An example of such a resin composition is a pellet.

Specific examples of the method include a method in which the polyamide resin A, the polyamide resin B, and, if necessary, other components to be blended are mixed in advance using various mixers such as a tumbler and a Henschel mixer, and then the mixture is melt-kneaded with a mixer such as a Banbury mixer, a roll, a Brabender, a single-screw kneading extruder, a twin-screw kneading extruder, or a kneader. The reinforcing material is preferably supplied from the middle of the extruder for preventing the reinforcing material from being crushed during kneading. Further, two or more components selected from the respective components may be premixed and kneaded.

When the polyamide resin B is fed into the extruder, one example of the shape thereof is, for example, a powder shape and a pellet shape. More specifically, the polyamide resin B is preferably a solid having a size of, for example, 5 µm or more, further 10 µm or more, particularly 15 µm or more, and 100 µm or less.

A temperature at which the resin composition of the present embodiment is melt-kneaded (for example, the setting temperature of the extruder) is preferably 320°C or less, more preferably 290°C or less, still more preferably 280°C or less, yet still more preferably 275°C or less, and even still more preferably 265°C or less. The temperature at which the resin composition of the present embodiment is melt-kneaded is preferably 240°C or more, more preferably 245°C or more, still more preferably 250°C or more, and yet still more preferably 255°C or more. When it is equal to or higher than the above lower limit, the dispersibility tends to be good.

### <Molded product>

The molded product of the present embodiment is formed from the resin composition of the present embodiment.

A method for producing the molded product of the present embodiment is not particularly limited.

For example, the molded product of the present embodiment may be directly molded by various molding methods after the components are melt-kneaded, or may be molded by various molding methods after the components are melt-kneaded and pelletized, and then molten again.

The method for forming the molded product is not particularly limited, and well-known molding methods can be adopted. Examples thereof include the injection molding method, the injection-compression molding method, the extrusion molding method, the profile extrusion method, the transfer molding method, the hollow molding method, the gas-assisted hollow molding method, the blow molding method, the extrusion blow molding, the IMC (in-mold coating molding) molding method, the rotary molding method, the multi-layer molding method, the two-color molding method, the insert molding method, the sandwich molding method, the foaming molding method, and the pressure molding method. The injection molding method is preferable.

The resin composition of the present embodiment is preferably used in a molding method using a mold, such as injection molding, and particularly preferably used in a molding method at a relatively low mold temperature. An example of the method for producing a molded product of the present embodiment is a method for producing a molded product, which includes molding the resin composition of the present embodiment using a mold, in which the mold temperature is less than 100°C (preferably 80 to 99°C).

Moreover, the resin composition of the present embodiment is preferably subjected to injection molding. A cylinder temperature at the injection molding is preferably lower than the melting point (°C) of the polyamide resin B, more preferably equal to or less than the melting point of the polyamide resin B - 5°C, still more preferably less than the melting point of the polyamide resin B - 10°C, further still more preferably equal to or less than the melting point of the polyamide resin B - 15°C, and yet still more preferably equal to or less than the melting point of the polyamide resin B - 20°C. When the cylinder temperature is equal to or lower than the upper limit, the polyamide resin B can be dispersed without being further melted. The cylinder temperature at the injection molding is preferably equal to or higher than the melting point of the polyamide resin A + 10°C, more preferably equal to or higher than the melting point of the polyamide resin A + 15°C, still more preferably more preferably equal to or higher than the melting point of the polyamide resin A + 20°C, and yet still more preferably equal to or higher the melting point of the polyamide resin A + 25°C.

The cylinder temperature in the present embodiment means a temperature of a set temperature of an injection molding machine.

Preferably, in the method for producing a molded product of present embodiment, in the resin composition immediately before the resin composition is injected to a mold for injection molding, the polyamide resin A is melted, and at least part of the polyamide resin B is not melted. With such a configuration, the polyamide resin B functions as a crystal nucleating agent, and the half-crystallization time can be shortened. Such conditions can be achieved by setting the cylinder temperature at the injection molding to the melting point of the polyamide resin A + 20°C or more and less than the melting point of the polyamide resin B.

The phrase "polyamide resin A is melted" includes a case where 100% of the polyamide resin A is completely melted and a case where a person skilled in the art in the technical field of the present invention recognizes that polyamide resin A is melted. For example, in a case where slightly unmelted portions are contained in the polyamide resin A, which corresponds to "the polyamide resin A is melted".

In addition, a part of the polyamide resin B is preferably not melted, but 50% by mass or more of the polyamide resin B is preferably not melted. The polyamide resin B is preferably present in the resin composition at the time of molding in the form of powder, pellets or the like.

In the molded product of the present embodiment, the polyamide resin B is preferably present in the polyamide resin A in the form of a solid having a size of, for example, 5 µm or more, further 10 µm or more, particularly 15 µm or more, and 100 µm or less. When the polyamide resin B having such a size is dispersed in the polyamide resin A, the effect of the present invention tends to be more effectively achieved. In the present embodiment, when the polyamide resin A and the polyamide resin B are melt-kneaded, the polyamide resin B may also be completely melted. In the present embodiment, at the time of molding, at least a part of the polyamide resin B is desirably present in an unmelted state.

The shape of the molded product of the present embodiment is not particularly limited, and can be selected as appropriate depending on the application and purpose of the molded product. Examples thereof include plate-like, plate-shaped, rod-shaped, sheet-like, film-like, cylindrical, annular-shaped, circular-shaped, oval-shaped, gear-shaped, polygon-shaped, odd-shaped, hollow, frame-shaped, box-shaped, and panel-shaped molded products.

The fields of application of the molded products of the present embodiment are not particularly limited, and the molded products can be widely used in applications such as transport machine components such as automobile components, general machine components, precision machine components, electronic and electrical equipment components, OA equipment components, building materials and building-related components, medical devices, leisure sports goods, playground equipment, medical products, household goods such as food packaging films, and defense and aerospace products.

### Examples

The present invention will next be described in more detail with reference to Examples. Materials, amounts used, proportions, processing details, and processing procedures described in the following Examples can be appropriately changed without departing from the spirit of the present invention. Thus, the scope of the present invention is not limited to the specific examples described below.

When a measuring device used in the Examples is not readily available due to, for example, discontinuation, another device with equivalent performance can be used for measurement.

### 1. Raw material

### <Synthesis of MP10 (70/30)>

Sebacic acid (manufactured by CASDA) was placed in a jacketed reactor equipped with an agitator, a partial condenser, a cooler, a thermometer, a dripping tank, and a nitrogen gas introduction tube, sufficiently purged with nitrogen, heated and melted at 170°C, and then the temperature was raised to 240°C while a mixed amine of m-xylylenediamine and p-xylylenediamine (molar ratio: 70:30) (MPXDA manufactured by Mitsubishi Gas Chemical Company, Inc.) was gradually added dropwise so that the molar ratio with sebacic acid was 1:1 under stirring the content. After the completion of dropwise addition, the temperature was increased to 260°C, and the reaction was continued for 20 minutes. Thereafter, the internal pressure of the reaction system was continuously reduced to 0.08 MPa, and then the reaction was continued. After completion of the reaction, by application of a pressure of 0.2 MPa using a nitrogen gas in the reactor, the polymer was taken out as a strand from a nozzle at a lower part of the polymerization tank and cooled with water, and the strand was then pelletized with a pelletizer to obtain a pellet.

The melting point of the obtained MP10 (70/30) was 215°C.

### <Synthesis of MP10 (60/40)>

<Synthesis of MP10 (70/30)> was carried out in the same manner as described above except that the molar ratio of the mixed amine of m-xylylenediamine and p-xylylenediamine was changed to 60/40.

The melting point of the obtained MP10 (60/40) was 223°C.

### <Synthesis of MXD10>

In a jacketed reactor equipped with an agitator, a partial condenser, a cooler, a thermometer, a dripping tank, and a nitrogen gas introduction tube, sebacic acid (available from CASDA) was placed, inside of the reactor was sufficiently purged with nitrogen, and the sebacic acid was heated and melted at 170°C. Then, while the contents were agitated and while m-xylylenediamine (MXDA, available from Mitsubishi Gas Chemical Company, Inc.) was gradually added dropwise in a manner that the molar ratio of the m-xylylenediamine to the sebacic acid became 1:1, the temperature was increased to 240°C. After the completion of dropwise addition, the temperature was increased to 260°C, and the reaction was continued for 20 minutes. Thereafter, the internal pressure of the reaction system was continuously reduced to 0.08 MPa, and then the reaction was continued. After completion of the reaction, by application of a pressure of 0.2 MPa using a nitrogen gas in the reactor, the polymer was taken out as a strand from a nozzle at a lower part of the polymerization tank and cooled with water, and the strand was then pelletized with a pelletizer to obtain a pellet.

The melting point of the obtained MXD10 was 190°C.

### <Synthesis of MP6 (70/30)>

Adipic acid (available from Roadia) (7220 g) (49.4 mol) and sodium acetate/sodium hypophosphite·monohydrate (molar ratio = 1/1.5) (11.66 g) were placed in a jacketed reactor equipped with an agitator, a partial condenser, a cooler, a thermometer, a dripping tank, and a nitrogen gas introduction tube, inside of the reactor was sufficiently purged with nitrogen, and the adipic acid was heated and melted at 170°C. Then, while the contents were agitated, 6647 g of a mixed xylylenediamine (34.16 mol of m-xylylenediamine and 14.64 mol of p-xylylenediamine, available from Mitsubishi Gas Chemical Company, Inc.), in which the molar ratio of m-xylylenediamine and p-xylylenediamine was 70/30, was added dropwise to the melted product in the reaction vessel under stirring. The internal temperature was continuously increased to 260°C over a period of 2.5 hours while the generated condensation water was discharged outside of the system. After dropwise addition was completed, the internal temperature was increased. When the temperature reached 270°C, the pressure inside the reaction vessel was reduced. The internal temperature was then further increased, and the melt polycondensation reaction was continued for 20 minutes at 280°C. Subsequently, the inside of the system was pressurized with nitrogen, and the obtained polymer was taken out from the strand die and pelletized to produce a polyamide resin.

The melting point of the obtained MP6 was 258°C.

### <Synthesis of PXD10>

In a jacketed reactor equipped with an agitator, a partial condenser, a cooler, a thermometer, a dripping tank, and a nitrogen gas introduction tube, sebacic acid (available from CASDA) was placed, inside of the reactor was sufficiently purged with nitrogen, and the sebacic acid was heated and melted at 170°C. Then, while the contents were agitated, p-xylylenediamine (PXDA, available from Showa Denko K.K.) was gradually added dropwise so that the molar ratio with the sebacic acid became 1:1, the temperature was increased to 290°C. After the completion of dropwise addition, the temperature was increased to 300°C, and the reaction was continued for 20 minutes. Thereafter, the internal pressure of the reaction system was continuously reduced to 0.08 MPa, and then the reaction was continued for 20 minutes. After completion of the reaction, by application of a pressure of 0.2 MPa using a nitrogen gas in the reactor, the polymer was taken out as a strand from a nozzle at a lower part of the polymerization tank and cooled with water, and the strand was then pelletized with a pelletizer to obtain a pellet.

The melting points of the obtained PXD10 were 280°C and 290°C. In this example, the higher melting point was treated as Tmb = 290°C.

### <Inorganic crystal nucleating agent>

Talc: Micron White 5000S available from HAYASHI KASEI CO., LTD.

### <Reinforcing material>

Glass fiber (GF): Glass fiber with a circular cross section, T-275H, E glass, chopped strand, number average fiber diameter of 10 µm, available from Nippon Electric Glass Co., Ltd.

### <Measurement of melting point of polyamide resin>

Using a differential scanning calorimeter (DSC), pieces having a length of 1 to 3 mm, which were obtained by cutting the pellet of the obtained polyamide resin (5 mg) with scissors, were used. Nitrogen as the atmospheric gas was allowed to flow at 50 mL/min, and the pieces were heated to a temperature of the melting point expected based on the room temperature + 20°C to 30°C at a temperature increase rate of 10°C/min, followed by rapid cooling. Then, the pieces were heated again to a temperature of the melting point expected based on the room temperature + 20°C to 30°C at a temperature increase rate of 10°C/min. From the temperature of the peak top of the endothermic peak observed at the time of melting, the melting point was determined.

As the differential scanning calorimeter (DSC), the DSC-60 available from Shimadzu Corporation was used.

### Examples 1 to 9, Comparative Examples 1 to 4, and Reference Examples 1 to 4 <Compound>

The components were weighed (the blended amount of each component was represented by parts by mass) and dry-blended so as to attain the compositions indicated in Table 1 or 2 below, and then the mixture was fed from the screw root of a twin-screw extruder (available from Shibaura Machine Co., Ltd., TEM26SS) using a twin-screw cassette weighing feeder (available from Kubota Corporation, CE-W-1-MP). The glass fibers were fed into the twin-screw extruder from the side of the extruder using a vibratory cassette weighing feeder (CE-V-1B-MP, available from Kubota Corporation), and melt-kneaded with the thermoplastic resin components and the like to obtain the resin composition (pellet). The temperature of the extruder was set as presented in Table 1 or 2. Table 1 or 2 indicates that, the polyamide resin (B) in Examples or Comparative Examples described as "powder 25 µm" is in the form of powder, and that, regarding powder PXD10 having an average diameter of 25 µm, which was described as "pellet" in Examples or Comparative Examples, PXD 10 as the pellet was charged into the extruder as it is.

### <Crystallization during injection molding (crystallization temperature in mold)>

The pellets obtained above were dried at 120°C for 8 hours, and then injection-molded by an injection-molding machine (SE130DU available from Sumitomo Heavy Industries, Ltd.), under the conditions of a cylinder temperature described in Table 1 or 2 and a mold temperature of 80°C or 90°C, into a three stage plate of 100 mm in length × 60 mm in width having thicknesses of 3 mm (a length of 40 mm), 2 mm (a length of 30 mm), and 1 mm (a length of 30 mm). Thereafter, whether or not the part having a thickness of 1 mm was crystallized was determined by the presence or absence of the crystallization energy when the portion was heated at 10°C/ min using DSC-60 (available from Shimadzu Corporation).
A: The crystallization energy is 0.1 J/g or more (crystallized at 80°C or 90°C)
B: The crystallization energy is less than 0.1 J/g (not crystallized at 80°C or 90°C)

### <Half-crystallization time of resin composition>

A film-like sample having a thickness of 0.1 mm was prepared by using the obtained resin composition (pellet), and the sample was put on a slide glass. The sample was left to stand for 3 minutes in an air bath set at the melting point + 20°C. Thereafter, the sample was placed between light beams that reach a sensor from a light source of an oil bath set at a measurement temperature through a polarizing plate, and half-crystallization times at 110°C and 150°C were calculated from a difference between voltages before and after crystallization.

Also, the difference between the half crystallization time at 110°C and the half crystallization time at 150°C was calculated.

### <Charpy impact strength with notch>

The pellets obtained above were dried at 120°C for 4 hours, and then injection-molded into ISO tensile test pieces (thickness of 4 mm) by an injection-molding machine ("NEX140III" available from Nissei Plastic Industrial Co., Ltd.), under the conditions of the injection molding temperature (cylinder temperature) described in Table 1 or 2 and a mold temperature of 110°C.

According to ISO 179-1, 2, the ISO tensile test piece (thickness of 4 mm) was used to measure the Charpy impact strength with notch (unit: kJ/m²) using a 1J hammer in an environment of temperature of 23°C and 50% RH. The results are presented in Table 1 and Table 2.

### <Retention rate of Charpy impact strength>

The retention rate of the Charpy impact strength was measured as compared with the case where the polyamide resin B and the inorganic crystal nucleating agent (micron white) were not added.

In each of Examples and Comparative Examples, resin compositions (pellets) were obtained in the same manner except that the polyamide resin B and the inorganic crystal nucleating agent were not blended. Further, using the obtained pellets, the Charpy impact strength with notch was measured in the same manner as described above.

The retention rate (unit: %) of the Charpy impact strength was calculated as compared with the case where the polyamide resin B and the inorganic crystal nucleating agent (micron white) were not added.

Retention rate = [Charpy impact strength of molded product molded from resin composition of Example or Comparative Example/Charpy impact strength of molded product molded from composition obtained by removing polyamide resin B and inorganic crystal nucleating agent from resin composition of Example or Comparative Example] × 100.

### <Dispersion size of PXD10>

The test piece prepared above was cut into pieces having a thicknesses of 5 µm to 10 µm using an ultramicrotome (available from Leica), and the dispersion size of the PXD10 was measured with a digital microscope (available from KEYENCE).

**[Table 1]**

| | | | Example 1 | Example 2 | Example 3 | Example 4 | Example 5 | Example 6 | Example 7 | Example 8 | Example 9 |
|---|---|---|---|---|---|---|---|---|---|---|---|
| Polyamide resin (A) | Polyamide resin | | MP10 | MP10 | MP10 | MP10 | MP10 | MXD10 | MP10 | MP10 | MP10 |
| | MXDA/PXDA ratio | | 70/30 | 70/30 | 70/30 | 70/30 | 60/40 | 100/0 | 70/30 | 70/30 | 70/30 |
| | Added amount | parts by mass | 69 | 65 | 65 | 60 | 65 | 60 | 65 | 65 | 65 |
| | Melting point | °C | 215 | 215 | 215 | 215 | 223 | 190 | 215 | 215 | 215 |
| Polyamide resin (B) | Polyamide resin | | PXD10 | PXD10 | PXD10 | PXD10 | PXD10 | PXD10 | PXD10 | PXD10 | PXD10 |
| | Shape | | Powder 25 µm | Powder 25 µm | Powder 25 µm | Powder 25 µm | Powder 25 µm | Powder 25 µm | Powder 25 µm | Pellet | Powder 25 µm |
| | Melting point | °C | 280/290 | 280/290 | 280/290 | 280/290 | 280/290 | 280/290 | 280/290 | 280/290 | 280/290 |
| | Added amount | parts by mass | 1 | 5 | 5 | 10 | 5 | 10 | 5 | 5 | 5 |
| Inorganic crystal nucleating agent | Added amount | parts by mass | - | - | 1 | - | - | - | - | - | - |
| Reinforcing material | Reinforcing material | | GF | GF | GF | GF | GF | GF | GF | GF | GF |
| | Added amount | parts by mass | 30 | 30 | 30 | 30 | 30 | 30 | 30 | 30 | 30 |
| Extrusion set temperature | | °C | 260 | 260 | 260 | 260 | 260 | 260 | 300 | 300 | 260 |
| Injection molding temperature | | °C | 260 | 260 | 260 | 260 | 260 | 260 | 260 | 260 | 270 |
| Evaluation results | | | | | | | | | | | |
| Crystallization temperature in mold | 80°C | | B | B | A | A | A | B | B | B | B |
| | 90°C | | B | A | A | A | A | A | A | A | A |
| Half-crystallization time | 110°C | sec | 17.8 | 9.5 | 9.8 | 8.8 | 7.3 | 14.6 | 9.7 | 9.6 | 9.6 |
| | 150°C | sec | 9.7 | 9.3 | 9.3 | 8.7 | 7.4 | 20.1 | 9.5 | 9.4 | 9.4 |
| Difference in half-crystallization time | | sec | 8.1 | 0.2 | 0.2 | 0.1 | 0.1 | 5.5 | 0.2 | 0.2 | 0.2 |
| Charpy impact strength | With notch | KJ/m² | 8.4 | 8.3 | 7.8 | 7.9 | 8.1 | 6.9 | 8.4 | 8.4 | 8.0 |
| Retention rate of Charpy impact strength | | % | 96.6 | 95.4 | 89.7 | 90.8 | 91.0 | 95.8 | 96.6 | 96.6 | 92.0 |
| Dispersion size of PXD10 | | µm | 20 to 25 | 20 to 25 | 20 to 25 | 20 to 25 | 20 to 25 | 20 to 25 | 20 to 80 | 20 to 80 | 20 to 25 |

**[Table 2]**

| | | | Comparative Example 1 | Comparative Example 2 | Comparative Example 3 | Comparative Example 4 | Reference Example 1 | Reference Example 2 | Reference Example 3 | Reference Example 4 |
|---|---|---|---|---|---|---|---|---|---|---|
| Polyamide resin (A) | Polyamide resin | | MP10 | MP6 | MP6 | MPI0 | MP10 | MP10 | MXD10 | MP6 |
| | MXDA/PXDA ratio | | 70/30 | 70/30 | 70/30 | 70/30 | 70/30 | 60/40 | 100/0 | 70/30 |
| | Added amount | parts by mass | 60 | 65 | 65 | 65 | 70 | 70 | 70 | 70 |
| | Melting point | °C | 215 | 258 | 258 | 215 | 215 | 215 | 190 | 258 |
| Polyamide resin (B) | Polyamide resin | | PA66 | PXD10 | PXD10 | - | - | - | - | - |
| | Shape | | Pellet | Powder 25 µm | Powder 25 µm | - | - | - | - | - |
| | Melting point | °C | 255 | 280/290 | 280/290 | - | - | - | - | - |
| | Added amount | parts by mass | 10 | 5 | 5 | - | - | - | - | - |
| Inorganic crystal nucleating agent | Added amount | parts by mass | - | 1 | - | 5 | - | - | - | - |
| Reinforcing material | Reinforcing material | | GF | GF | GF | GF | GF | GF | GF | GF |
| | Added amount | parts by mass | 30 | 30 | 30 | 30 | 30 | 30 | 30 | 30 |
| Extrusion set temperature | | °C | 300 | 280 | 280 | 300 | 260 | 260 | 260 | 280 |
| Injection molding temperature | | °C | 260 | 280 | 280 | 260 | 260 | 260 | 260 | 280 |
| Evaluation results | | | | | | | | | | |
| Crystallization temperature in mold | 80°C | | B | B | B | B | B | B | B | B |
| | 90°C | | B | B | B | B | B | B | B | B |
| Half-crystallization time | 110°C | sec | 29.2 | 43 | 45 | 7.1 | 78.4 | 62.3 | 110.5 | 195.8 |
| | 150°C | sec | 15.7 | 19 | 20 | 9.4 | 14.3 | 12.9 | 28.6 | 14.8 |
| Difference in half-crystallization time | | sec | 13.5 | 24 | 25 | 2.3 | 64.1 | 49.4 | 81.9 | 181 |
| Charpy impact strength | With notch | KJ/m² | 7.9 | 6.1 | 6.0 | 7.0 | 8.7 | 8.9 | 7.2 | 6.7 |
| Retention rate of Charpy impact strength | | % | 90.8 | 91.0 | 89.6 | 80.5 | - | - | - | - |
| Dispersion size of PXD10 | | µm | - | 20 to 25 | 20 to 25 | - | - | - | - | - |

In Table 1 or 2 above, the MXDA/PXDA ratio indicates a molar ratio.

As is clear from the above results, in the resin composition of the present invention, the crystallization rate was high, the decrease in physical properties of the obtained molded product was small, and the crystallization rate was hardly dependent on the mold temperature (Examples 1 to 9).

On the other hand, when polyamide 66 was used instead of the polyamide resin B (Comparative Example 1), the half-crystallization time greatly changed depending on the mold temperature.

In addition, in the polyamide resin A, when 70 mol% or more of the structural unit derived from a dicarboxylic acid was not derived from an α,ω-linear aliphatic dicarboxylic acid having 7 to 16 carbon atoms (Comparative Examples 2 and 3), the half-crystallization time significantly changed depending on the mold temperature.

Furthermore, in the case where the polyamide resin B was not blended (Reference Examples 1 to 4), the half-crystallization time significantly changed depending on the mold temperature.

On the other hand, in the case where talc was blended without blending the polyamide resin B (Comparative Example 4), the half-crystallization time did not depend on the mold temperature, but the retention rate of physical properties was remarkably lowered.

Furthermore, in the molded product formed from the resin composition of the present invention, it can be said that the PXD10 is dispersed, and is not melted in the resin composition even immediately before injection into a mold for injection molding (in the cylinder).

## Claims

1. A resin composition, comprising:
a polyamide resin A; and
a polyamide resin B,
wherein the resin composition includes 1 to 15 parts by mass of the polyamide resin B, per 100 parts by mass of a total of the polyamide resin A and the polyamide resin B,
a difference (Tmb-Tma) between a melting point Tmb of the polyamide resin B according to differential scanning calorimetry (DSC) and a melting point Tma of the polyamide resin A according to differential scanning calorimetry (DSC) is 35 to 110°C,
the polyamide resin A includes a structural unit derived from a diamine and a structural unit derived from a dicarboxylic acid, the structural unit derived from a diamine including 100 to 50 mol% of a structural unit derived from m-xylylenediamine and 0 to 50 mol% of a structural unit derived from p-xylylenediamine, with the proviso that a total of the structural unit derived from m-xylylenediamine and the structural unit derived from p-xylylenediamine does not exceed 100 mol%, and 70 mol% or more of the structural unit derived from a dicarboxylic acid being derived from an α,ω-linear aliphatic dicarboxylic acid having 7 to 16 carbon atoms, and
the polyamide resin B includes a structural unit derived from a diamine and a structural unit derived from a dicarboxylic acid, the structural unit derived from a diamine including 100 to 95 mol% of a structural unit derived from p-xylylenediamine and 0 to 5 mol% of a structural unit derived from m-xylylenediamine, with the proviso that a total of the structural unit derived from p-xylylenediamine and the structural unit derived from m-xylylenediamine does not exceed 100 mol%, and 70 mol% or more of the structural unit derived from a dicarboxylic acid being derived from an α,ω-linear aliphatic dicarboxylic acid having 7 to 16 carbon atoms.

2. The resin composition described in claim 1, wherein the melting point Tma of the polyamide resin A according to the differential scanning calorimetry (DSC) is 180 to 240°C.

3. The resin composition described in claim 1 or 2, wherein 70 mol% or more of the structural unit derived from a dicarboxylic acid in the polyamide resin A is derived from sebacic acid.

4. The resin composition described in any one of claims 1 to 3, wherein the melting point Tmb of the polyamide resin B according to the differential scanning calorimetry (DSC) is 270 to 320°C.

5. The resin composition described in any one of claims 1 to 4, wherein 70 mol% or more of the structural unit derived from a dicarboxylic acid in the polyamide resin B is derived from sebacic acid.

6. The resin composition described in claim 1,
wherein the melting point Tma of the polyamide resin A according to the differential scanning calorimetry (DSC) is 180 to 240°C,
70 mol% or more of the structural unit derived from a dicarboxylic acid in the polyamide resin A is derived from sebacic acid,
the melting point Tmb of the polyamide resin B according to the differential scanning calorimetry (DSC) is 270 to 320°C, and
70 mol% or more of the structural unit derived from a dicarboxylic acid in the polyamide resin B is derived from sebacic acid.

7. The resin composition described in any one of claims 1 to 6, further comprising 10 to 150 parts by mass of a reinforcing material per 100 parts by mass of a total of the polyamide resin A and the polyamide resin B.

8. A molded product, comprising the resin composition described in any one of claims 1 to 7.

9. A method for producing a molded product, the method comprising injection-molding the resin composition described in any one of claims 1 to 7.

10. The method for producing a molded product described in claim 9, wherein a cylinder temperature at the injection-molding is equal to or higher than the melting point of the polyamide resin A + 20°C and is lower than the melting point of the polyamide resin B.

11. The method for producing a molded product described in claim 9 or 10, wherein, in the resin composition immediately before the resin composition is injected into a mold for injection molding, the polyamide resin A is melted, and at least part of the polyamide resin B is not melted.
